# EUROPEAN PATENT SPECIFICATION

(11) **EP 3 112 645 B1**
(45) Date of publication and mention of the grant of the patent: **15.08.2018**
(21) Application number: 16173959.4
(22) Date of filing: 10.06.2016
(51) Int. Cl.: F02D 41/24, F02D 41/00, F02B 37/24, F02D 41/14

(54) **CONTROLLER FOR INTERNAL COMBUSTION ENGINE AND CONTROL METHOD THEREFOR**
STEUERUNG FÜR EINEN VERBRENNUNGSMOTOR UND STEUERUNGSVERFAHREN DAFÜR
COMMANDE DE MOTEUR À COMBUSTION INTERNE ET SON PROCÉDÉ DE COMMANDE

(30) Priority: 02.07.2015 JP 2015133308
(43) Date of publication of application: 04.01.2017
(73) Proprietor: Bosch Corporation, Tokyo 150-8360 (JP)
(72) Inventor: MASUDA, Tomonori, Saitama, 3558603 (JP); MAKINO, Hajime, Saitama, 3558603 (JP)

(56) References cited:
- EP-A1- 1 982 063
- EP-A1- 2 853 721
- EP-A2- 1 026 378
- JP-A- 2006 132 429
- US-A1- 2013 304 355

## Description

### BACKGROUND OF THE INVENTION

### 1. Field of the Invention

The invention relates to a controller for an internal combustion engine mounted in a vehicle or the like and a control method therefor.

### 2. Description of the Background Art

A supercharger of a so-called turbocharger type has widely been used to improve thermal efficiency of an internal combustion engine. In the supercharger of the turbocharger type, as described in Patent Document 1, for example, an exhaust flow rate adjusting valve (a waste gate valve) that causes exhaust gas flowing through a turbine to bypass is provided as an adjusting element in an exhaust route, and the turbine's workload is changed in accordance with an opening degree of the exhaust flow rate adjusting valve. In this way, supercharging pressure is controlled. In the internal combustion engine provided with the above-described supercharger, a throttle valve is also provided in an intake route so as to adjust an intake air amount of the air that is suctioned into the internal combustion engine. The above-described exhaust flow rate adjusting valve and throttle valve are promptly changed to respective target opening degrees through control based on a model operation value that is calculated by using a physical equation (model base control), for example, and thereby realize favorable response performance (drivability).

Further, Patent Document 2 describes a method to prevent hunting of a throttle in a region in which a throttle upstream pressure and a throttle downstream pressure become substantially equal to each other in an internal combustion engine with a supercharger.
Patent Document 1: JP-T-2005-504210
Patent Document 2: US 2013/304355 A1

### SUMMARY OF THE INVENTION

However, the prompt change of the opening degree of the throttle valve leads to an abrupt variation in the supercharging pressure. Consequently, even when the opening degree of the exhaust flow rate adjusting valve is changed, the supercharging pressure may not be able to follow target supercharging pressure as in a case where a hunting of time response of the supercharging pressure occurs . In addition, a passing flow rate through the throttle valve is also changed by controlling the supercharging pressure. Consequently, even when the opening degree of the throttle valve is changed, the intake air amount may not be able to follow a target intake air amount as in a case where a hunting of time response of the intake air amount occurs in addition to that of the supercharging pressure.

That is, in the case where the exhaust flow rate adjusting valve and the throttle valve are simultaneously adjusted to control the supercharging pressure and the intake air amount, response may become unstable as in a case where at least one of the supercharging pressure and the intake air amount is not smoothly converged or is diverged due to interference between the exhaust flow rate adjusting valve and the throttle valve. When control of either one of the supercharging pressure and the intake air amount is slowed down to prevent such unstable response, responsiveness (quick response performance) of the control is degraded.

The invention has been made in view of the above-described problem and therefore has a purpose of providing a controller for an internal combustion engine and a control method for an internal combustion engine capable of maintaining or improving responsiveness of both of control of an intake air amount and control of supercharging pressure while stably controlling both of the intake air amount and the supercharging pressure.

In order to solve the above-described conventional problems, the invention has the features as described in the apparatus claim 1 and the method claim 6.

The invention is a controller for an internal combustion engine that controls: a throttle valve that adjusts an intake air amount of air that is suctioned into the internal combustion engine; and a supercharger that drives a turbine by using exhaust gas that flows through an exhaust route of the internal combustion engine so as to supercharge the air that flows through an intake route into the internal combustion engine by a compressor coupled to the turbine, and that includes: a target value setting section that sets a target intake air amount of the air that is suctioned into the internal combustion engine and target supercharging pressure of the air that is supercharged into the internal combustion engine based on an operation state of the internal combustion engine; a requested throttle valve opening degree computing section that computes a requested throttle valve opening degree that is requested to the throttle valve in accordance with the set target intake air amount; a requested exhaust flow rate adjusting valve opening degree computing section that computes a requested exhaust flow rate adjusting valve opening degree that is requested to an exhaust flow rate adjusting valve that adjusts a flow rate of the exhaust gas that flows through the exhaust route in accordance with the computed target supercharging pressure; and a filter processing section that applies a filter to a variation in an instructed throttle valve opening degree that is instructed to the throttle valve so as to make the throttle valve follow the requested throttle valve opening degree. The filter is a low pass filter with a variable pass characteristic, and the pass characteristic is set in accordance with a difference between the requested throttle valve opening degree and the instructed throttle valve opening degree that has been subjected to the filter processing and with the requested throttle valve opening degree. The filter processing section extracts a filter with a pass characteristic that corresponds to the difference between the requested throttle valve opening degree and the instructed throttle valve opening degree that has been subjected to the filter processing and to the requested throttle valve opening degree and applies the extracted filter with the pass characteristic, so as to maintain or correct the variation in the instructed throttle valve opening degree that follows the requested throttle valve opening degree.

In the controller for the internal combustion engine according to one aspect of the invention, the filter has time constants, each of which is set in accordance with the difference between the requested throttle valve opening degree and the instructed throttle valve opening degree that has been subjected to the filter processing and with the requested throttle valve opening degree, and the filter processing section causes a delay in a variation in the instructed throttle valve opening degree that follows the requested throttle valve opening degree in accordance with the time constant as the extracted filter.

In the controller for the internal combustion engine according to the one aspect of the invention, the filter processing section maintains the variation in the instructed throttle valve opening degree that follows the requested throttle valve opening degree in an opening degree region as a dead zone of the requested throttle valve opening degree with respect to the supercharging pressure.

In the controller for the internal combustion engine according to the one aspect of the invention, in the case where the requested throttle valve opening degree is changed to an opening direction with respect to the instructed throttle valve opening degree that has been subjected to the filter processing, the filter processing section maintains the variation in the instructed throttle valve opening degree that follows the requested throttle valve opening degree.

In the controller for the internal combustion engine according to the one aspect of the invention, a drive instructing section that executes drive control of the exhaust flow rate adjusting valve so as to make the exhaust flow rate adjusting valve follow the requested exhaust flow rate adjusting valve opening degree and that executes drive control of the throttle valve so as to make the throttle valve follow the instructed throttle valve opening degree that has been subjected to the filter processing by the filter processing section is provided.

The invention as described above can also be comprehended as a control method for an internal combustion engine.

According to the invention, responsiveness of both of control of the intake air amount and control of the supercharging pressure can be maintained or improved while both of the intake air amount and the supercharging pressure are stably controlled.

### BRIEF DESCRIPTION OF THE DRAWINGS

Fig. 1 is a view for depicting a schematic configuration of an engine control system, to which a controller for an internal combustion engine according to one embodiment of the invention is applied;
Fig. 2 is a block diagram that schematically depicts a functional configuration of an ECU as the controller for the internal combustion engine according to the embodiment of the invention;
Figs. 3A and 3B include tables for illustrating a configuration of a filter that is provided in the ECU depicted in Fig. 2, in which Fig. 3A is a table for schematically depicting the configuration of the filter and Fig. 3B is a table for depicting one example of the configuration of the filter;
Fig. 4 is a block diagram for schematically depicting filter processing that is executed by a filter processing section depicted in Fig. 2;
Fig. 5 is a flowchart of a control method that is executed by the ECU depicted in Fig. 2;
Figs. 6A to 6C include graphs for illustrating various types of time response according to a comparison example in which a throttle valve is controlled without using the filter processing, in which Fig. 6A is a graph that depicts time response of actual supercharging pressure and target supercharging pressure, Fig. 6B is a graph that depicts time response of an actual opening degree of the throttle valve and an actual opening degree of a VNT valve, and Fig. 6C is a graph that depicts time response of an actual intake air amount and a target intake air amount; and
Figs. 7A to 7C include graphs for illustrating various types of time response according to this embodiment, in which Fig. 7A is a graph that depicts time response of the actual supercharging pressure and the target supercharging pressure; Fig. 7B is a graph that depicts time response of the actual opening degree of the throttle valve and the actual opening degree of the VNT valve, and Fig. 7C is a graph that depicts time response of the actual intake air amount and the target intake air amount.

### DETAILED DESCRIPTION OF THE PREFERRED EMBODIMENTS

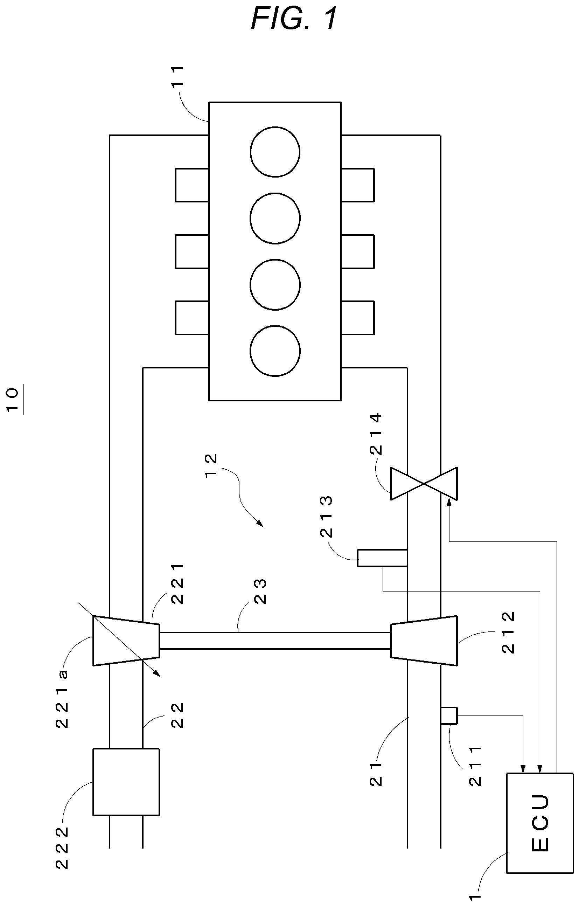

A description will be made on a mode for carrying out the invention (hereinafter referred to as this embodiment) by using a specific example. This embodiment relates to a controller for an internal combustion engine mounted in a vehicle or the like. More specifically, the controller for the internal combustion engine is embedded in an engine control system 10 as depicted in Fig. 1, for example. With reference to Fig. 1, a description will hereinafter be made on a configuration of the engine control system 10 and an operation thereof by focusing attention on intake air amount control for controlling an intake air amount of the air that is suctioned into an engine 11 and supercharging pressure control for controlling supercharging pressure of the air that is supercharged into the engine 11.

### 1. Engine control system

As depicted in Fig. 1, the engine control system 10 includes: the engine 11; an intake pipe 21 and an exhaust pipe 22, each of which is connected to the engine 11; and an engine control unit 1 (hereinafter referred to as an ECU 1).

The engine 11 is one aspect of the internal combustion engine according to the invention and is, for example, a reciprocating engine, such as a diesel engine that uses diesel fuel as a power source or a gasoline engine that uses gasoline fuel as a power source. More specifically, the engine 11 suctions ambient air (air) from the intake pipe 21 as an intake route that is connected to an ambient air inlet, combusts fuel, and thereby generates power. Then, the engine 11 discharges exhaust gas after combustion to the exhaust pipe 22 as an exhaust route. In the following description, the engine 11 is the diesel engine.

An airflow meter 211, a compressor 212, a supercharging pressure sensor 213, and a throttle valve 214 are provided from an upstream side to a downstream side (the engine 11 side) on the intake pipe 21.

A turbine 221 and an exhaust after-treatment device 222, such as a catalyst and DPF, are provided from an upstream side (the engine 11 side) to a downstream side on the exhaust pipe 22.

In addition, the compressor 212 and the turbine 221 are mechanically coupled to each other via a bearing section 23 for supporting the compressor 212 and the turbine 221 on the same rotary shaft, and constitute a supercharger 12 that causes the compressor 212 to rotate by using rotational energy of the turbine 221 and supercharges the air to the engine 11. Here, the turbine 221 is provided with, as an exhaust flow rate adjusting valve, a variable nozzle turbo valve 221a (hereinafter also referred to as a VNT valve 221a) that changes an exhaust gas pass-through area of the turbine 221. An opening degree of the VNT valve 221a is controlled by the ECU 1 as will be described below. Note that the exhaust flow rate adjusting valve is not limited to the VNT valve 221a but a waste gate valve that adjusts an air amount flowing through a bypass route of the turbine 221 may be used. Hereinafter, a description will be made by using the VNT valve 221a as one aspect of the exhaust flow rate adjusting valve.

The airflow meter 211 is an intake air amount sensor that is provided on the upstream side on the intake pipe 21 as described above, for example, measures an air amount that flows through the intake pipe 21 from the ambient air inlet, and notifies the ECU 1 of a measurement result. Note that an attachment position of the airflow meter 211 is not limited to an upstream section of the compressor 212 but may be an arbitrary position on the intake pipe 21.

The supercharging pressure sensor 213 is a pressure sensor that is provided on the intake route between the compressor 212 and the throttle valve 214 as described above, for example, detects pressure of the air that is supercharged into the engine 11 (supercharging pressure), and notifies the ECU 1 of the detected supercharging pressure (actual supercharging pressure). Note that an attachment position of the supercharging pressure sensor 213 is not limited to that between the compressor 212 and the throttle valve 214 but may be an arbitrary position on the downstream side (the engine 11 side) of the compressor 212.

The throttle valve 214 changes the opening degree by following an instruction from the ECU 1 as will be described below and thereby adjusts the intake air amount of the air that is suctioned into the engine 11. For example, in a case of an operation mode in which the exhaust after-treatment device 222 regenerates a diesel particulate filter (DPF), the throttle valve 214 reduces the intake air amount by shifting the opening degree to a close side in comparison with another operation mode, so as to prevent a reduction in an exhaust temperature.

The ECU 1 is a microcomputer that is constructed of an input/output device, an arithmetic unit for performing various types of arithmetic processing, a main memory for temporarily storing arithmetic processing data, and a storage device for storing arithmetic programs, and realizes processing as follows when a control program for controlling the engine control system 10 is installed in the storage device. More specifically, the ECU 1 controls an operation of the entire engine control system 10 by changing a fuel injection amount injected into the engine 11 and the opening degrees of the throttle valve 214 and the VNT valve 221a based on operation information by a driver, such as an accelerator pedal position, and detection information from various sensors including the airflow meter 211 and the supercharging pressure sensor 213. That is, the controller for the internal combustion engine, to which the invention is applied, is realized as one function of the ECU 1.

Note that the ECU 1 is not limited to the above-described microprocessor but may be dedicated hardware, such as a programmable logic device, that is designed to control the engine control system 10.

### 2. Controller for internal combustion engine

### (Overall configuration)

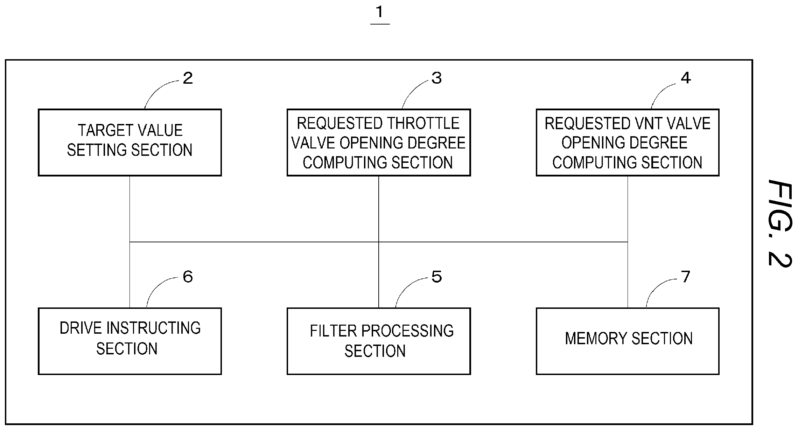

Next, a functional configuration of the ECU 1 will specifically be described. Fig. 2 is a block diagram that schematically depicts the functional configuration of the ECU 1. As depicted in Fig. 2, the ECU 1 includes a target value setting section 2, a requested throttle valve opening degree computing section 3, a requested VNT valve opening degree computing section 4, a filter processing section 5, a drive instructing section 6, and a memory section 7.

The target value setting section 2 sets an optimum flow rate of the air that is suctioned into the engine 11 (hereinafter referred to as a target intake air amount) and also sets optimum supercharging pressure of the air that is supercharged into the engine 11 (hereinafter referred to as target supercharging pressure) based on a state of the engine 11, for example, operation state information of the engine 11, such as a rotational frequency, target torque (or an instructed injection amount), and various temperatures and pressures. In this embodiment, the target intake air amount is set for an intake air amount immediately before an intake manifold of the engine 11. However, the target intake air amount is not limited thereto and may be set for an intake air amount at an arbitrary position in the intake pipe 21, such as the attachment position of the airflow meter 211. In addition, the target supercharging pressure is set for pressure at an attachment position of the supercharging pressure sensor 213. However, the target supercharging pressure is not limited thereto, and a target value may be set for supercharging pressure at an arbitrary position in the intake pipe 21. For example, the target value is set for pressure immediately before the intake manifold of the engine 11.

Values of the intake air amount and the supercharging pressure that respectively correspond to the states of the engine 11 (a target rotational frequency and the target torque) are set in advance by an experiment and are stored as a data table in the memory section 7. The target value setting section 2 refers to this data table, extracts the intake air amount and the supercharging pressure corresponding to detection values that indicate the operation state of the engine 11 (the target rotational frequency and the target torque) and that are detected by the various sensors, corrects the extracted intake air amount and supercharging pressure based on detection values of the various temperatures and pressures, and sets each of the target intake air amount and the target supercharging pressure.

In order to control the throttle valve 214, the requested throttle valve opening degree computing section 3 computes an opening degree that is requested to the throttle valve 214 (hereinafter also referred to as a requested throttle valve opening degree) in accordance with the target intake air amount set by the target value setting section 2 and a detection value of the airflow meter 211. The requested throttle valve opening degree is computed by a model operation that uses a physical model of the engine control system 10. That is, the requested throttle valve opening degree is computed based on a physical equation, such as a throttle equation of the throttle valve 214.

In order to control the VNT valve 221a, the requested VNT valve opening degree computing section 4 computes an opening degree that is requested to the VNT valve 221a (hereinafter also referred to as a requested VNT valve opening degree) in accordance with the target supercharging pressure set by the target value setting section 2 and a detection value of the supercharging pressure sensor 213. The requested VNT valve opening degree is computed by the model operation that uses the physical model of the engine control system 10. That is, the requested VNT valve opening degree is computed based on physical equations, such as a throttle equation of the VNT valve 221a and a conversion efficiency equation of the turbine 221 and the compressor 212.

The filter processing section 5 executes filter processing on a variation in the opening degree that is instructed to the throttle valve 214 (hereinafter also referred to as an instructed throttle valve opening degree), more specifically, a stepwise change in the instructed throttle valve opening degree so as to make the instructed throttle valve follow the requested throttle valve opening degree, which is computed by the requested throttle valve opening degree computing section 3. That is, in the filter processing, the instructed throttle valve opening degree that follows the requested throttle valve opening degree is maintained or corrected via a filter. The filter is a low pass filter with a variable pass characteristic (time constant), and the filter characteristic (the time constant) is set in correspondence with a difference between the requested throttle valve opening degree that is computed this time and the last instructed throttle valve opening degree that has been subjected to the filter processing (hereinafter also referred to as a throttle valve opening degree deviation) and with the requested throttle valve opening degree that is computed this time. Information indicative of the corresponding relationships is stored as a data table in the memory section 7.

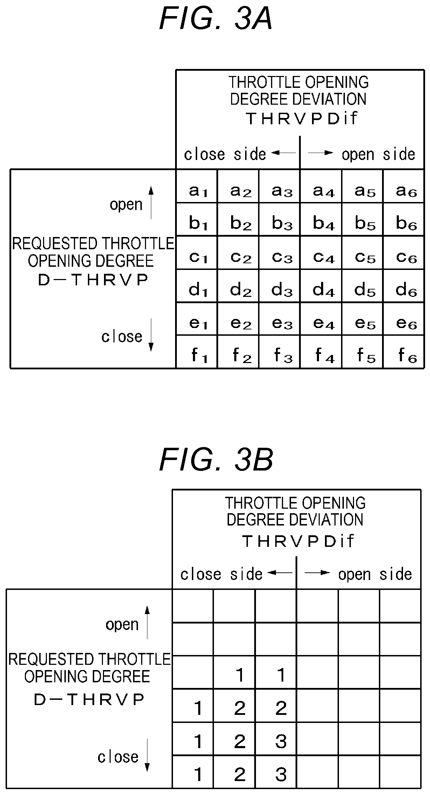

Figs. 3A and 3B include tables for illustrating a configuration of the filter, in which Fig. 3A is a table for schematically depicting the configuration of the filter and Fig. 3B is a table for depicting one example of the configuration of the filter. As depicted in Figs. 3A and 3B, each of the filters is set in accordance with the throttle valve opening degree deviation and the requested throttle valve opening degree and forms the data table.

As depicted in Fig. 3A, in the data table, the throttle valve opening degree deviation in an opening direction of the intake throttle valve 214 is divided into specified ranges. In addition, the throttle valve opening degree deviation in a closing direction of the throttle valve 214 is divided into specified ranges. The number of division of the throttle valve opening degree deviation in the opening direction of the throttle valve 214 is equal to the number of division of the throttle valve opening degree deviation in the closing direction of the throttle valve 214. In this embodiment, the throttle valve opening degree deviation in the opening direction of the throttle valve 214 is divided into three ranges (a₄ to a₆, ...f₄ to f₆). In addition, the throttle valve opening degree deviation in the closing direction of the throttle valve 214 is similarly divided into three ranges (a₁ to a₃, ...f₁ to f₃). A range a₁ to f₁ is a range where the throttle valve 214 is abruptly driven in the closing direction, and a range a₃ to f₃ is a range where the throttle valve 214 is moderately driven in the closing direction. A range a₂ to f₂ is an intermediate range therebetween. On the contrary, a range a₆ to f₆ is a range where the throttle valve 214 is abruptly driven in the opening direction, and a range a₄ to f₄ is a range where the throttle valve 214 is moderately driven in the opening direction. A range a₅ to f₅ is an intermediate range therebetween.

In addition, as depicted in Fig. 3A, in the data table, the requested throttle valve opening degree is divided into specified ranges from full opening to full closing. In this embodiment, the requested throttle valve opening degree is divided into six ranges (a₁ to a₆, ..., f₁ to f₆). A range a₁ to a₆ is a range that includes a maximum opening degree (the full opening) of the requested throttle valve and the opening degrees in a specified range from the maximum. A range f₁ to f₆ is a range that includes a minimum opening degree (the full closing) of the requested throttle valve and the opening degrees in a specified range from the minimum.

In the data table, the pass characteristic (the time constant) of the filter is set in correspondence with a combination of each of the divided throttle valve opening degree deviations and each of the divided requested throttle valve opening degrees. That is, one filter is set for each combination of the throttle valve opening degree deviation and the requested throttle valve opening degree. Each of the filters represents the time constant. Note that a method for setting the filters is not limited to what is described above. A method for dividing the throttle valve opening degree deviation and a method for dividing the requested throttle valve opening degree are not limited to the above-described methods for dividing.

The filter processing section 5 extracts the filter that corresponds to the throttle valve opening degree deviation and the requested throttle valve opening degree from the data table, and maintains or corrects the variation in the instructed throttle valve opening degree that follows the requested throttle valve opening degree and is computed via this extracted filter.

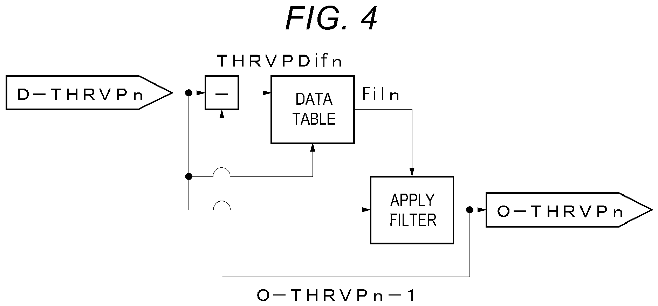

Hereinafter, the filter processing by the filter processing section 5 will be described. Fig. 4 is a block diagram for schematically depicting the filter processing executed by the filter processing section 5. As depicted in Fig. 4, the filter processing section 5 computes a throttle valve opening degree deviation THRVPDifn ("D-THRVPn" - "O-THRVPn-1") that is a difference between a requested throttle valve opening degree D-THRVPn that is computed in the requested throttle valve opening degree computing section 3 this time (an n time) and an instructed throttle valve opening degree O-THRVPn-1 that has been subjected to the filter processing in the last filter processing (an n-1 time). The throttle valve opening degree deviation THRVPDifn corresponds to a change amount of the throttle valve opening degree that is requested in opening degree control of the throttle valve 214 this time with the last instructed throttle valve opening degree being a reference. Then, the above data table is referred to extract a filter Filn that corresponds to the throttle valve opening degree deviation THRVPDifn and the requested throttle valve opening degree D-THRVPn that are computed this time. This extracted filter Filn is applied to the requested throttle valve opening degree D-THRVPn, and an instructed throttle valve opening degree O-THRVPn that follows the requested throttle valve opening degree D-THRVPn is maintained or corrected in accordance with the filter Filn. Then, this instructed throttle valve opening degree O-THRVPn is transmitted to the drive instructing section 6 and is also transmitted to and stored in the memory section 7, and the filter processing is terminated.

In application of a filter Filn to a requested throttle valve opening degree D-THRVP, for example, correction coefficient α that corresponds to the time constant provided in the filter Filn is computed or detected, and the requested throttle valve opening degree D-THRVP is multiplied by this correction coefficient α. In this way, the requested throttle valve opening degree D-THRVP is reduced in accordance with the time constant (the correction coefficient α), and an instructed throttle valve opening degree O-THRVP that becomes smaller than the requested throttle valve opening degree D-THRVP is computed. When the filter Filn does not have the time constant, in other words, when the time constant is 0, the requested throttle valve opening degree D-THRVP is not corrected but maintained, and the requested throttle valve opening degree D-THRVP becomes the instructed throttle valve opening degree O-THRVP. When the requested throttle valve opening degree D-THRVPn is corrected (reduced) to become the instructed throttle valve opening degree O-THRVP, drive control of the throttle valve 214 is delayed (dulled). On the other hand, when the requested throttle valve opening degree D-THRVPn is maintained to become the instructed throttle valve opening degree O-THRVP, the drive control of the throttle valve 214 is not delayed (dulled).

The drive instructing section 6 receives a requested VNT valve opening degree D-VNTVP that is computed in the requested VNT valve opening degree computing section 4 and the instructed throttle valve opening degree O-THRVP that is computed in the filter processing section 5, executes drive control of the VNT valve 221a such that the VNT valve 221a follows the requested VNT valve opening degree D-VNTVP, and executes the drive control of the throttle valve 214 such that the throttle valve 214 follows the instructed throttle valve opening degree O-THRVP. Alternatively, the drive instructing section 6 outputs the requested VNT valve opening degree D-VNTVP to a drive section of the VNT valve 221a and outputs the instructed throttle valve opening degree O-THRVP to a drive section of the throttle valve 214. In this way, the VNT valve 221a is driven such that the opening degree thereof becomes the requested VNT valve opening degree D-VNTVP, and the throttle valve 214 is driven such that the opening degree thereof becomes the instructed throttle valve opening degree O-THRVP.

According to the above-described filter processing, the characteristic (the time constant) of the filter is set in accordance with the requested throttle valve opening degree that is requested to the throttle valve 214. In this way, reaction of the throttle valve 214 can be dulled or made quick in accordance with a state of the throttle valve 214. Accordingly, in the case where the requested throttle valve opening degree is controlled in such an opening degree region where sensitivity thereof to the supercharging pressure is high, the reaction of the throttle valve 214 can be dulled by increasing the filter, in other words, by increasing the time constant. In this way, control of the supercharging pressure can be stabilized. In addition, in the case where the requested throttle valve opening degree is controlled in such an opening degree region where the sensitivity thereof to the supercharging pressure is low, the reaction of the throttle valve 214 can be made quick by reducing the filter, in other words, by reducing the time constant or reducing the time constant to 0. In this way, responsiveness of control of the intake air amount can be increased without destabilizing the control of the supercharging pressure.

Furthermore, the characteristic (the time constant) of the filter is set in accordance with a change rate of the requested throttle valve opening degree, and thus the reaction of the throttle valve 214 can be dulled or made quick in accordance with a drive state of the throttle valve 214. Accordingly, in the case where the requested throttle valve opening degree is significantly changed, the reaction of the throttle valve 214 can be made quick by reducing the filter, in other words, by reducing the time constant or reducing the time constant to 0. In this way, the responsiveness of the control of the intake air amount can be increased without destabilizing the control of the supercharging pressure. On the other hands, in the case where the requested throttle valve opening degree is slightly changed, the reaction of the throttle valve 214 is dulled by increasing the filter, in other words, by increasing the time constant. In this way, the control of the supercharging pressure can be stabilized without sacrificing the responsiveness of the control of the intake air amount.

For example, in the case where the filter characteristics are set in a manner to constitute the data table as depicted in Fig. 3B, the responsiveness of the control of the intake air amount can be maintained or improved while the supercharging pressure is stably controlled. In Fig. 3B, filters 1, 2, 3 each correspond to the time constant. For example, 1, 2, and 3 respectively correspond to 10 msec, 100 msec, and 200 msec. Note that various signs and various methods can be applied to setting signs and a setting method for the filter.

More specifically, in this data table, as depicted in Fig. 3B, the filter (the time constant) is not set, in other words, the time constant is 0 [sec] in the ranges of the requested throttle valve opening degree (a₁ to a₆, b₁ to b₆) as a dead zone where the supercharging pressure is not influenced. Accordingly, when the requested throttle valve opening degree is in an opening degree region as the dead zone thereof with respect to the supercharging pressure, the filter cannot be applied to the requested throttle valve opening degree D-THRVP, and the intake air amount can promptly be changed to the target intake air amount at the instructed throttle valve opening degree that follows the requested throttle valve opening degree D-THRVP.

In addition, a small filter (1) is set in the ranges (d₁, e₁, f₁) where the requested throttle valve opening degree is significantly changed in the closing direction. In this way, when the throttle valve 214 needs to be significantly changed, the reaction of the throttle valve 214 is not significantly dulled, and thus the responsiveness of the control of the intake air amount is not degraded. On the other hand, a large filter (3) is set in the ranges (e₃, f₃) where the requested throttle valve opening degree is slightly changed in such an opening degree region where the sensitivity thereof to the supercharging pressure is high. Accordingly, when the throttle valve 214 is requested to be driven in the closing direction in such a region where the sensitivity thereof to the supercharging pressure is high, the reaction of the throttle valve 214 is dulled. In this way, interference caused by the simultaneous operations of the VNT valve 221a and the throttle valve 214 can be suppressed, and both of the control of the supercharging pressure and the control of the intake air amount can be stabilized.

Furthermore, as depicted in Fig. 3B, in this data table, the filter (the time constant) is not set in the ranges where the throttle valve 214 is driven in the opening direction (a₄ to f₄, a₅ to f₅, a₆ to f₆). Accordingly, when the driver depresses an accelerator pedal significantly, the filter processing section 5 does not correct the requested throttle valve opening degree D-THRVP, and a rapid increase of the intake air amount that is supplied to the engine 11 is not prevented. Therefore, there is no adverse influence on drivability.

Moreover, when the requested throttle valve opening degree D-THRVP and a throttle valve opening degree deviation THRVPDif are shifted from one combination to another combination among the combinations of the divided ranges of the requested throttle valve opening degree D-THRVP and the divided ranges of the throttle valve opening degree deviation THRVPDif in the data tables depicted in Figs. 3A and 3B, a compensating calculation is performed for the instructed throttle valve opening degree O-THRVP that is computed. In this way, between two each of the combinations depicted in Figs. 3A and 3B, that is, between two each of the filters, the instructed throttle valve opening degree O-THRVPn that is computed this time and the instructed throttle valve opening degree O-THRVPn-1 that is computed last time are smoothly linked.

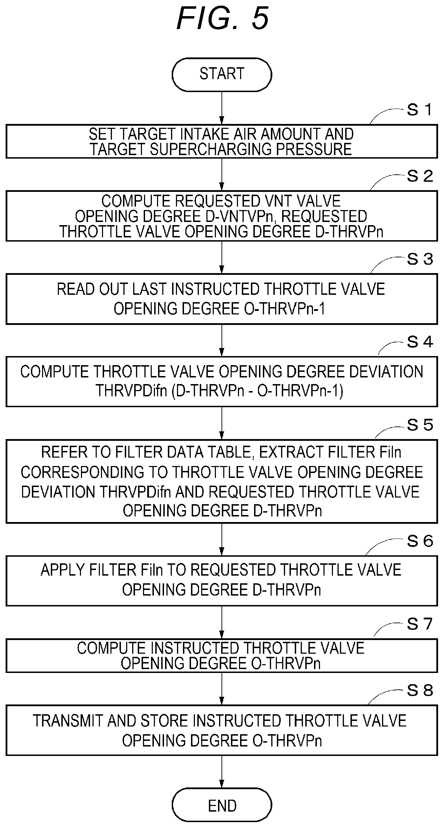

Next, a control method that is executed by the ECU 1 with the above configuration will be described by following a flowchart depicted in Fig. 5. As a precondition of the processing, which will be described below, the ECU 1 executes control processing that follows the flowchart depicted in Fig. 5 at specified intervals.

As depicted in Fig. 5, when the control processing is initiated, the target value setting section 2 sets the target intake air amount and the target supercharging pressure (step S1). Next, the requested throttle valve opening degree computing section 3 computes the requested throttle valve opening degree D-THRVPn of this time (the n time), and the requested VNT valve opening degree computing section 4 computes a requested VNT valve opening degree D-VNTVPn of this time (step S2). Then, the filter processing section 5 receives the requested throttle valve opening degree D-THRVPn that is computed in step S2, and reads out the instructed throttle valve opening degree O-THRVPn-1 that has been subjected to the filter processing in the last filter processing (the n-1 time) and is stored in the memory section 7 (step S3). Next, the throttle valve opening degree deviation THRVPDifn ("D-THRVPn" - "O-THRVPn-1") that is the difference between the requested throttle valve opening degree D-THRVPn of this time that is computed in step S2 and the instructed throttle valve opening degree O-THRVPn-1 of the last time that is read out in step S3 (step S4). Then, the data table of the above filter is referred, and the filter Filn that corresponds to the throttle valve opening degree deviation THRVPDifn and the requested throttle valve opening degree D-THRVPn computed this time is extracted (step S5) . This extracted filter Filn is applied to the requested throttle valve opening degree D-THRVPn (step S6), and the instructed throttle valve opening degree O-THRVPn of this time is computed by maintaining or correcting the requested throttle valve opening degree D-THRVPn in accordance with the filter Filn (step S7) . Then, this computed instructed throttle valve opening degree O-THRVPn is transmitted to the drive instructing section 6 and is also transmitted to and stored in the memory section 7 (step S8), and the filter processing is terminated.

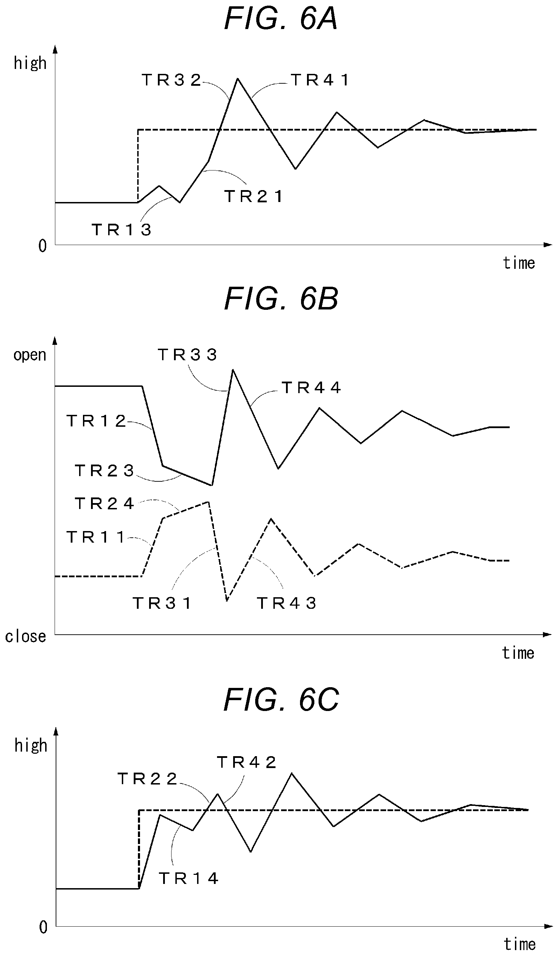

A description will hereinafter be made on an example that is realized by the above control method. First, prior to the example, with reference to Figs. 6A to 6C, a description will be made on a comparative example in which a drive instruction is made without executing the filter processing, in other words, without correcting the requested throttle valve opening degree D-THRVP and by setting the requested throttle valve opening degree as the instructed throttle valve opening degree O-THRVPn. Fig. 6A is a graph in which a horizontal axis indicates a temporal change and a vertical axis indicates pressure, a solid line represents the actual supercharging pressure, and a broken line represents the target supercharging pressure. In addition, Fig. 6B is a graph in which a horizontal axis indicates a temporal change and a vertical axis indicates the opening degree on an open side on an upper side and the opening degree on a close side on a lower side, a solid line represents an actual opening degree of the VNT valve 221a, and a broken line represents an actual opening degree of the throttle valve 214. Furthermore, Fig. 6C is a graph in which a horizontal axis indicates a temporal change and a vertical axis indicates an air amount, a solid line represents an actual intake air amount, and a broken line represents the target intake air amount.

As it is apparent from Figs. 6A to 6C, in the comparative example, in the case where the target intake air amount and the target supercharging pressure are increased in accordance with depression of the accelerator pedal or the like, as a first behavior, the actual opening degree of the VNT valve 221a is changed to the close side as indicated by time response TR12 in Fig. 6B while the actual opening degree of the throttle valve 214 is changed to the open side as indicated by time response TR11 in Fig. 6B. Due to opening of the throttle valve 214 like the time response TR11, the compressed air between the compressor 212 and the throttle valve 214 is released to the downstream side of the throttle valve 214. Accordingly, pressure on the upstream side of the throttle valve 214, that is, the supercharging pressure is once reduced as indicated by time response TR13 in Fig. 6A. Due to this reduction in the supercharging pressure, the intake air amount is also reduced as indicated by time response TR14 in Fig. 6C.

Next, as a second behavior, as indicated by time response TR21 in Fig. 6A and time response TR22 in Fig. 6C, both of the intake air amount and the supercharging pressure are changed in an increasing direction. In the middle of such changes, the opening degree of the VNT valve 221a is changed to the close side as indicated by time response TR23 in Fig. 6B. Accordingly, the actual intake air amount is increased to be at least equal to an intake air amount that is expected from the opening degree of the throttle valve 214 changed to the open side as indicated by time response TR24 in Fig. 6B, and the intake air amount exhibits overshoot.

Next, as a third behavior, in the case where closing motion of the throttle valve 214 is quick as indicated by time response TR31 in Fig. 6B, at the same time as that the supercharging pressure exhibits overshoot as indicated by time response TR32 in Fig. 6A, the VNT valve 221a is opened instantaneously to reduce the supercharging pressure as indicated by time response TR33 in Fig. 6B.

Thereafter, as a fourth behavior, the supercharging pressure is reduced as indicated by time response TR41 in Fig. 6A. Accordingly, the intake air amount is also reduced as indicated by time response TR42 in Fig. 6C. Furthermore, as indicated by time response TR43 in Fig. 6B, the motion of the throttle valve 214 is reversed to the open side, and the supercharging pressure on the upstream side of the throttle valve 214 keeps being reduced along with this reversal. Accordingly, as indicated by time response TR44 in Fig. 6B, the VNT valve 221a is reversed to the close side.

Thereafter, the above first to fourth behaviors are repeated. The VNT valve 221a and the throttle valve 214 interfere with each other, and the intake air amount and the supercharging pressure each repeat the overshoot and undershoot, which leads to a delay in convergence to the target values.

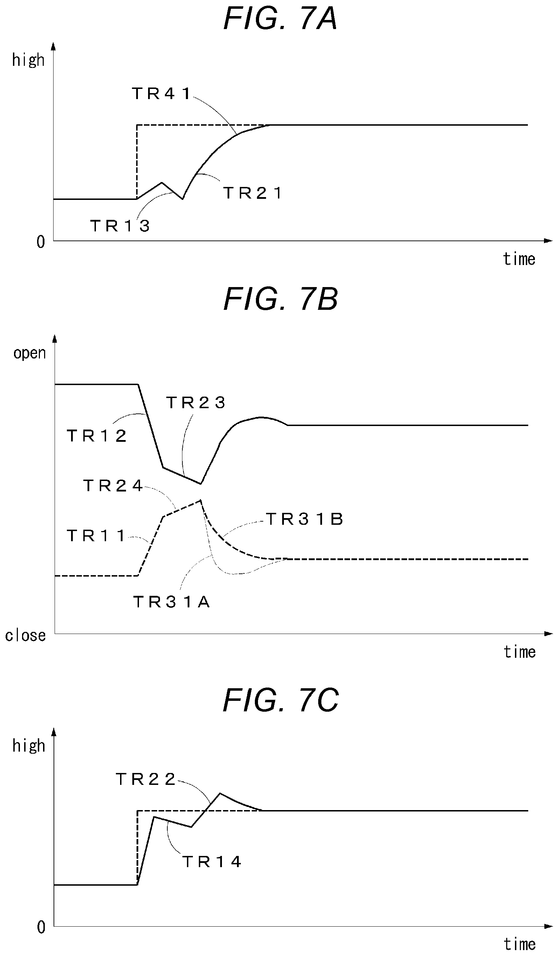

With reference to Figs. 7A to 7C, behaviors in this embodiment in which the processing depicted in Fig. 5 above is executed will be described in contrast to the above comparative example. Fig. 7A is a graph in which a horizontal axis indicates the temporal change and a vertical axis indicates the pressure, a solid line represents the actual supercharging pressure, and a broken line represents the target supercharging pressure. In addition, Fig. 7B is a graph in which a horizontal axis indicates the temporal change and a vertical axis indicates the opening degree on the open side on an upper side and the opening degree on the close side on a lower side, a solid line represents the actual opening degree of the VNT valve 221a, and a broken line represents the actual opening degree of the throttle valve 214. Furthermore, Fig. 7C is a graph in which a horizontal axis indicates the temporal change and a vertical axis indicates the air amount, a solid line represents the actual intake air amount, and a broken line represents the target intake air amount.

As it is apparent from Figs. 7A to 7C, in this embodiment, in the case where the target intake air amount and the target supercharging pressure are increased in accordance with the depression of the accelerator pedal or the like, as a first behavior, while the actual opening degree of the throttle valve 214 is changed to the open side as indicated by the time response TR11 in Fig. 7B, the actual opening degree of the VNT valve 221a is changed to the close side as indicated by the time response TR12 in Fig. 7B. Due to opening of the throttle valve 214 like the time response TR11, the compressed air between the compressor 212 and the throttle valve 214 is released to the downstream side of the throttle valve 214. Accordingly, the pressure on the upstream side of the throttle valve 214, that is, the supercharging pressure is once reduced as indicated by the time response TR13 in Fig. 7A. Due to this reduction in the supercharging pressure, the intake air amount is also reduced as indicated by the time response TR14 in Fig. 7C.

Next, as a second behavior, as indicated by the time response TR21 in Fig. 7A and the time response TR22 in Fig. 7C, both of the intake air amount and the supercharging pressure are changed in the increasing direction. In the middle of such changes, the opening degree of the VNT valve 221a is changed to the close side as indicated by the time response TR23 in Fig. 7B. Accordingly, the actual intake air amount is increased to be at least equal to the intake air amount that is expected from the opening degree of the throttle valve 214 changed to the open side as indicated by the time response TR24 in Fig. 7B, and the intake air amount exhibits the overshoot.

That is, from the first to the second behaviors, the filter processing section 5 extracts the filter with the time constant as 0, and the throttle valve 214 is driven at the requested throttle valve opening degree. Accordingly, the behaviors are similar to those in the comparative example. However, as will be described below, third to fourth behaviors differ from those in the comparative example.

More specifically, because the throttle valve 214 is driven in the closing direction in such a region where the sensitivity thereof to the supercharging pressure is high in the third behavior, one of the filters (1) to (3) is applied to the motion of the throttle valve 214 that is indicated by time response TR31A on the broken line in Fig. 7B. In this way, as indicated by time response TR31B on the broken line in Fig. 7B, the throttle valve 214 is gently driven in the closing direction. In other words, as the actual opening degree of the throttle valve 214 approaches the full closing, the sensitivity of the variation therein to the supercharging pressure is increased. Accordingly, the motion of the throttle valve 214 becomes gentle by the filter with the large time constant.

Next, as the fourth behavior, the filter is applied to the closing motion of the throttle valve 214 as described above, and thus the supercharging pressure is not abruptly increased but is converged to the target supercharging pressure as indicated by the time response TR41 in Fig. 7A.

As described above, the filter is extracted based on the requested throttle valve opening degree and the change rate of the requested throttle valve opening degree, and the throttle valve 214 is driven at the instructed throttle valve opening degree O-THRVPn that is obtained by correcting the requested throttle valve opening degree D-THRVP. Accordingly, as depicted in Figs. 7A and 7C, the intake air amount and the supercharging pressure are respectively controlled to be the target intake air amount and the target supercharging pressure in a stable and prompt manner, and, unlike the comparative example depicted in Figs. 6A and 6C, hunting of the control of the intake air amount and hunting of the control of the supercharging pressure can be suppressed.

As described above, according to the ECU 1 according to the embodiment of the invention, the responsiveness of both of the control of the intake air amount and the control of the supercharging pressure can be maintained or improved while both of the intake air amount and the supercharging pressure are stably controlled.

### 3. Others

Note that the intake air amount is not limited to the value detected by the airflow meter 211 and a value that is estimated by the physical model from values of the various sensors provided in the engine control system 10 may be used therefor. Similarly, the supercharging pressure is not limited to the value detected by the above-described supercharging pressure sensor 213, and a value that is estimated by the physical model from values of the various sensors provided in the engine control system 10 may be used therefor. In addition, application of the controller for the internal combustion engine, to which the invention is applied, is not limited to one unit of the supercharger 12 as described above, and the controller can also be applied to an internal combustion engine that includes two units of a low-pressure stage supercharger and a high-pressure stage supercharger.

In addition, the application of the controller for the internal combustion engine, to which the invention is applied, is not limited to the operation mode in which the diesel particulate filter (DPF) is regenerated (a DPF regenerative mode), and the controller can also be applied to arbitrary operation modes. However, the time constants are preferably changed in accordance with the operation mode. More specifically, in a case of the DPF regenerative mode, the throttle valve 214 is driven on the close side in comparison with the other operation modes. Accordingly, while the time constant is increased to cause a delay in the motion of the throttle valve 214 in the DPF regenerative mode, the values in the table depicted in Fig. 3A are preferably set in the other operation modes so as to prevent the delay in the motion of the throttle valve 214 that is beyond necessity and is caused by reducing the time constant.

Furthermore, the invention may be realized by providing a non-temporary recording medium, in which an engine control program that realizes the functions of the above-described embodiment is recorded, in the ECU and making a processing unit (a CPU, an MPU) of the ECU read out and execute the engine control program that is recorded in the recording medium.

In this case, the engine control program that is read out from the non-temporary recording medium realizes the functions of the above-described embodiment. Thus, the engine control program and the non-temporary recording medium, in which this program is recorded, are also one aspect of the invention.

As the non-temporary recording medium that provides the engine control program, for example, a flexible disc, a hard disc, a magnet-optical disc, an optical disc such as CD-ROM, CD-R, CD-RW, DVD-ROM, DVD-RAM, DVD-RW, and DVD+RW, a magnetic tape, a non-volatile memory card, and a ROM are included. Alternatively, the program may be downloadable via a communication network.

## Claims

1. A controller for an internal combustion engine (11) that controls: a throttle valve (214) that adjusts an intake air amount of air that is suctioned into the internal combustion engine (11) ; and a supercharger (12) that drives a turbine (221) by using exhaust gas that flows through an exhaust route of the internal combustion engine (11) so as to supercharge the air that flows through an intake route into the internal combustion engine (11) by a compressor (212) coupled to the turbine (221), the controller for the internal combustion engine (11) comprising:
a target value setting section (2) that sets a target intake air amount of the air that is suctioned into the internal combustion engine (11) and target supercharging pressure of the air that is supercharged into the internal combustion engine (11) based on an operation state of the internal combustion engine (11);
a requested throttle valve opening degree computing section (3) that computes a requested throttle valve (214) opening degree that is requested to the throttle valve (214) in accordance with the set target intake air amount;
a requested exhaust flow rate adjusting valve opening degree computing section that computes a requested exhaust flow rate adjusting valve opening degree that is requested to an exhaust flow rate adjusting valve that adjusts a flow rate of the exhaust gas that flows through the exhaust route in accordance with the computed target supercharging pressure; and
a filter processing section (5) that executes filter processing in which a filter is applied to a variation in an instructed throttle valve opening degree that is instructed to the throttle valve (214) so as to make the throttle valve (214) follow the requested throttle valve opening degree, **characterised in that** the filter is a low pass filter with a variable pass characteristic based on time constants, and the pass characteristic based on time constants is set in accordance with the throttle valve opening degree deviation and the requested throttle valve opening degree, whereby the throttle valve opening degree deviation is equal to a difference between the requested throttle valve opening degree and the last instructed throttle valve opening degree that has been subjected to the filter processing, and
the filter processing section (5) extracts a filter with a pass characteristic that corresponds to the throttle valve opening degree deviation and the requested throttle valve opening degree and applies the extracted filter with the pass characteristic, so as to maintain or correct the variation in the instructed throttle valve opening degree that follows the requested throttle valve opening degree.

2. The controller for the internal combustion engine (11) according to claim 1, wherein
each of the time constants of the filter is set in accordance with the difference between the requested throttle valve opening degree and the instructed throttle valve opening degree that has been subjected to the filter processing and with the requested throttle valve opening degree, and
the filter processing section (5) causes a delay in a variation in the instructed throttle valve opening degree that follows the requested throttle valve opening degree in accordance with the time constant as the extracted filter.

3. The controller for the internal combustion engine (11) according to claim 1 or 2, wherein
the filter processing section (5) maintains the variation in the instructed throttle valve opening degree that follows the requested throttle valve opening degree in an opening degree region as a dead zone of the requested throttle valve opening degree with respect to the supercharging pressure.

4. The controller for the internal combustion engine (11) according to any one of claims 1 to 3, wherein
in the case where the requested throttle valve opening degree is changed to an opening direction with respect to the instructed throttle valve opening degree that has been subjected to the filter processing, the filter processing section (5) maintains the variation in the instructed throttle valve opening degree that follows the requested throttle valve opening degree.

5. The controller for the internal combustion engine (11) according to any one of claims 1 to 4, further comprising:
a drive instructing section (6) that executes drive control of the exhaust flow rate adjusting valve so as to make the exhaust flow rate adjusting valve follow the requested exhaust flow rate adjusting valve opening degree and that executes drive control of the throttle valve (214) so as to make the throttle valve (214) follow the instructed throttle valve opening degree that has been subjected to the filter processing by the filter processing section (5) .

6. A control method for an internal combustion engine (11) that controls: a throttle valve (214) that adjusts an intake air amount of air that is suctioned into the internal combustion engine (11); and a supercharger (12) that drives a turbine (221) by using exhaust gas that flows through an exhaust route of the internal combustion engine (11) so as to supercharge the air that flows through an intake route into the internal combustion engine (11) by a compressor (212) coupled to the turbine (221), the control method for the internal combustion engine (11) comprising:
a target value setting process that sets a target intake air amount of the air that is suctioned into the internal combustion engine (11) and target supercharging pressure of the air that is supercharged into the internal combustion engine (11) based on an operation state of the internal combustion engine (11);
a requested throttle valve opening degree computing process that computes a requested throttle valve opening degree that is requested to the throttle valve (214) in accordance with the set target intake air amount;
a requested exhaust flow rate adjusting valve opening degree computing process that computes a requested exhaust flow rate adjusting valve opening degree that is requested to an exhaust flow rate adjusting valve that adjusts a flow rate of the exhaust gas that flows through the exhaust route in accordance with the computed target supercharging pressure; and
a filter processing process that executes filter processing in which a filter is applied to a variation in an instructed throttle valve opening degree that is instructed to the throttle valve (214) so as to make the throttle valve (214) follow the requested throttle valve opening degree, **characterised in that** the filter is a low pass filter with a variable pass characteristic based on time constants, and the pass characteristic based on time constants is set in accordance with the throttle valve opening degree deviation and the requested throttle valve opening degree, whereby the throttle valve opening degree deviation is equal to a difference between the requested throttle valve opening degree and the last instructed throttle valve opening degree that has been subjected to the filter processing, and
in the filter processing process, a filter with a pass characteristic that corresponds to the throttle valve opening degree deviation and the requested throttle valve opening degree is extracted, and the extracted filter with the pass characteristic is applied, so as to maintain or correct the variation in the instructed throttle valve opening degree that follows the requested throttle valve opening degree.

## Patentansprüche

1. Steuerung für einen Verbrennungsmotor (11), die Folgendes steuert: eine Drosselklappe (214), die eine Ansaugluftmenge von Luft, die in den Verbrennungsmotor (11) gesaugt wird, einstellt; und einen Lader (12), der unter Verwendung von Abgas, das durch eine Abgasleitung des Verbrennungsmotors (11) strömt, eine Turbine (221) antreibt, um die Luft, die durch eine Ansaugleitung in den Verbrennungsmotor (11) strömt, durch einen Verdichter (212), der mit der Turbine (221) verbunden ist, aufzuladen, wobei die Steuerung für den Verbrennungsmotor (11) Folgendes aufweist:
einen Zielwerteinstellungsabschnitt (2), der eine Ziel-Ansaugluftmenge der Luft, die in den Verbrennungsmotor (11) gesaugt wird und einen Ziel-Ladedruck der Luft, die in dem Verbrennungsmotor (11) aufgeladen wird, auf Grundlage eines Betriebszustands des Verbrennungsmotors (11) einstellt;
einen Berechnungsabschnitt (3) für einen angeforderten Drosselklappen-Öffnungsgrad, der einen angeforderten Öffnungsgrad der Drosselklappe (214), der für die Drosselklappe (214) angefordert wird, in Übereinstimmung mit der eingestellten Ziel-Ansaugluftmenge berechnet;
einen Berechnungsabschnitt eines angeforderten Ventilöffnungsgrades zur Einstellung der Abgasdurchflussrate, der einen angeforderten Öffnungsgrad eines Abgasdurchflussraten-Einstellventils, der für ein Abgasdurchflussraten-Einstellventil, das eine Durchflussrate des Abgases, das durch die Abgasleitung strömt, in Übereinstimmung mit dem berechneten Ziel-Ladedruck, einstellt, berechnet; und
einen Filterverarbeitungsabschnitt (5), der eine Filterverarbeitung durchführt, in der ein Filter auf eine Schwankung in einem angewiesenen Drosselklappen-Öffnungsgrad angewendet wird, der für die Drosselklappe (214) angewiesen ist, um die Drosselklappe (214) zu veranlassen, dem angeforderten Drosselklappen-Öffnungsgrad zu folgen, **dadurch gekennzeichnet, dass**
das Filter ein Tiefpassfilter mit einer variablen Durchlass-Charakteristik auf Grundlage von Zeitkonstanten ist, und die auf den Zeitkonstanten basierende Durchlass-Charakteristik in Übereinstimmung mit der Drosselklappen-Öffnungsgradabweichung und dem angeforderten Drosselklappen-Öffnungsgrad festgelegt wird, wobei die Drosselklappen-Öffnungsgradabweichung einer Differenz zwischen dem angeforderten Drosselklappen-Öffnungsgrad und dem zuletzt angewiesenen Drosselklappen-Öffnungsgrad, der der Filterverarbeitung unterzogen wurde, entspricht, und
der Filterverarbeitungsabschnitt (5) ein Filter mit einer Durchlass-Charakteristik extrahiert, die der Drosselklappen-Öffnungsgradabweichung und dem angeforderten Drosselklappen-Öffnungsgrad entspricht und das extrahierte Filter mit der Durchlass-Charakteristik anwendet, um die Schwankung im angewiesenen Drosselklappen-Öffnungsgrad, die dem angeforderten Drosselklappen-Öffnungsgrad folgt, zu erhalten oder zu korrigieren.

2. Steuerung für den Verbrennungsmotor (11) nach Anspruch 1, wobei
jede der Zeitkonstanten des Filters in Übereinstimmung mit der Differenz zwischen dem angeforderten Drosselklappen-Öffnungsgrad und dem angewiesenen Drosselklappen-Öffnungsgrad, der der Filterverarbeitung unterzogen wurde, und mit dem angeforderten Drosselklappen-Öffnungsgrad eingestellt wird, und
der Filterverarbeitungsabschnitt (5) eine Verzögerung einer Schwankung des angewiesenen Drosselklappen-Öffnungsgrades, die auf den angeforderten Drosselklappen-Öffnungsgrad folgt, in Übereinstimmung mit der Zeitkonstante als das extrahierte Filter verursacht.

3. Steuerung für den Verbrennungsmotor (11) nach Anspruch 1 oder 2, wobei
der Filterverarbeitungsabschnitt (5) die Schwankung des angewiesenen Drosselklappen-Öffnungsgrades, der dem angeforderten Drosselklappen-Öffnungsgrad folgt, in einem Öffnungsgradbereich als eine Totzone des angeforderten Drosselklappen-Öffnungsgrades in Bezug auf den Ladedruck aufrechterhält.

4. Steuerung für den Verbrennungsmotor (11) nach einem der Ansprüche 1 bis 3, wobei
in dem Fall, in dem der angeforderte Drosselklappen-Öffnungsgrad zu einer Öffnungsrichtung in Bezug auf den angewiesenen Drosselklappen-Öffnungsgrad, der der Filterverarbeitung unterzogen wurde, geändert wird, der Filterverarbeitungsabschnitt (5) die Schwankung in dem angewiesenen Drosselklappen-Öffnungsgrad, der dem angeforderten Drosselklappen-Öffnungsgrad folgt, erhält.

5. Steuerung für den Verbrennungsmotor (11) nach einem der Ansprüche 1 bis 4, ferner aufweisend:
einen Antriebsanweisungsabschnitt (6), der eine Antriebssteuerung des Abgasdurchflussraten-Einstellventils durchführt, um das Abgasdurchflussraten-Einstellventil zu veranlassen, dem angeforderten Öffnungsgrad des Abgasdurchflussraten-Einstellventils zu folgen, und der eine Antriebssteuerung der Drosselklappe (214) durchführt, um die Drosselklappe (214) zu veranlassen, dem angeforderten Drosselklappen-Öffnungsgrad zu folgen, der der Filterverarbeitung durch den Filterverarbeitungsabschnitt (5) unterzogen wurde.

6. Steuerungsverfahren für einen Verbrennungsmotor (11), das Folgendes steuert: eine Drosselklappe (214), die eine Ansaugluftmenge von Luft, die in den Verbrennungsmotor (11) gesaugt wird, einstellt; und einen Lader (12), der eine Turbine (221) mittels Abgas, das durch eine Abgasleitung des Verbrennungsmotors (11) strömt, antreibt, um die Luft, die durch eine Ansaugleitung in den Verbrennungsmotor (11) strömt, durch einen Verdichter (212), der mit der Turbine (221) verbunden ist, aufzuladen, wobei das Steuerungsverfahren für den Verbrennungsmotor (11) Folgendes aufweist:
einen Zielwerteinstellungsvorgang, der eine Ziel-Ansaugluftmenge der Luft, die in den Verbrennungsmotor (11) gesaugt wird und einen Ziel-Ladedruck der Luft, die in dem Verbrennungsmotor (11) aufgeladen wird, auf Grundlage eines Betriebszustands des Verbrennungsmotors (11) einstellt;
einen Berechnungsvorgang für einen angeforderten Öffnungsgrad einer Drosselklappe, der einen angeforderten Öffnungsgrad einer Drosselklappe, der für die Drosselklappe (214) angefordert wird, in Übereinstimmung mit der eingestellten Ziel-Ansaugluftmenge berechnet;
einen Berechnungsvorgang eines angeforderten Ventilöffnungsgrades zur Einstellung der Abgasdurchflussrate, der einen angeforderten Öffnungsgrad eines Abgasdurchflussraten-Einstellventils, der für ein Abgasdurchflussraten-Einstellventil, das eine Durchflussrate des Abgases, das durch die Abgasleitung strömt, in Übereinstimmung mit dem berechneten Ziel-Ladedruck, einstellt, berechnet; und
einen Filterverarbeitungsvorgang, der eine Filterverarbeitung durchführt, in der ein Filter auf eine Schwankung in einem angewiesenen Drosselklappen-Öffnungsgrad angewendet wird, die für die Drosselklappe (214) angewiesen wird, um die Drosselklappe (214) zu veranlassen, dem angeforderten Drosselklappen-Öffnungsgrad zu folgen, **dadurch gekennzeichnet, dass**
das Filter ein Tiefpassfilter mit einer variablen Durchlass-Charakteristik auf Grundlage von Zeitkonstanten ist, und die auf den Zeitkonstanten basierende Durchlass-Charakteristik in Übereinstimmung mit der Drosselklappen-Öffnungsgradabweichung und dem angeforderten Drosselklappen-Öffnungsgrad festgelegt wird, wobei die Drosselklappen-Öffnungsgradabweichung einer Differenz zwischen dem angeforderten Drosselklappen-Öffnungsgrad und dem zuletzt angewiesenen Drosselklappen-Öffnungsgrad, der der Filterverarbeitung unterzogen wurde, entspricht, und
im Filterverarbeitungsvorgang ein Filter mit einer Durchlass-Charakteristik, die der Drosselklappen-Öffnungsgradabweichung und dem angeforderten Drosselklappen-Öffnungsgrad entspricht, extrahiert wird, und das extrahierte Filter mit der Durchlass-Charakteristik angewendet wird, um die Schwankung im angewiesenen Drosselklappen-Öffnungsgrad, der dem angeforderten Drosselklappen-Öffnungsgrad folgt, zu erhalten oder zu korrigieren.

## Revendications

1. Dispositif de commande pour un moteur à combustion interne (11), qui commande: une soupape d'étranglement (214) qui règle une quantité d'air d'admission de l'air qui est aspiré dans le moteur à combustion interne (11); et un turbocompresseur (12) qui entraîne une turbine (221) en utilisant le gaz d'échappement qui s'écoule à travers une route d'échappement du moteur à combustion interne (11) de manière à suralimenter l'air qui s'écoule à travers une route d'admission dans le moteur à combustion interne (11) par un compresseur (212) couplé à la turbine (221), le dispositif de commande pour le moteur à combustion interne (11) comprenant:
une section de réglage de valeur cible (2) qui établit une quantité d'air d'admission cible de l'air qui est aspiré dans le moteur à combustion interne (11) et une pression de suralimentation cible de l'air qui est suralimenté dans le moteur à combustion interne (11) sur la base d'un état de fonctionnement du moteur à combustion interne (11);
une section de calcul du degré d'ouverture de soupape d'étranglement requis (3) qui calcule un degré d'ouverture requis de la soupape d'étranglement (214) qui est requis pour la soupape d'étranglement (214) selon la quantité d'air d'admission cible établie;
une section de calcul du degré d'ouverture de soupape de réglage de débit d'échappement requis qui calcule un degré d'ouverture de soupape de réglage de débit d'échappement requis qui est requis pour une soupape de réglage de débit d'échappement qui règle un débit du gaz d'échappement qui s'écoule à travers la route d'échappement selon la pression de suralimentation cible calculée; et
une section de traitement de filtre (5) qui exécute un traitement de filtre dans lequel un filtre est appliqué à une variation d'un degré d'ouverture de soupape d'étranglement commandé qui est commandé pour la soupape d'étranglement (214) de manière à assurer que la soupape d'étranglement (214) suive le degré d'ouverture de soupape d'étranglement requis,
**caractérisé en ce que** le filtre est un filtre passe-bas qui présente une caractéristique de passe variable basée sur des constantes de temps, et la caractéristique de passe basée sur des constantes de temps est établie selon la déviation du degré d'ouverture de soupape d'étranglement et le degré d'ouverture de soupape d'étranglement requis, dans lequel la déviation du degré d'ouverture de soupape d'étranglement est égale à une différence entre le degré d'ouverture de soupape d'étranglement requis et le dernier degré d'ouverture de soupape d'étranglement commandé qui a été soumis au traitement de filtre, et
la section de traitement de filtre (5) extrait un filtre qui présente une caractéristique de passe qui correspond à la déviation du degré d'ouverture de soupape d'étranglement et au degré d'ouverture de soupape d'étranglement requis et qui applique le filtre extrait qui présente la caractéristique de passe, de manière à maintenir ou à corriger la variation du degré d'ouverture de soupape d'étranglement commandé qui suit le degré d'ouverture de soupape d'étranglement requis.

2. Dispositif de commande pour le moteur à combustion interne (11) selon la revendication 1, dans lequel
chacune des constantes de temps du filtre est réglée selon la différence entre le degré d'ouverture de soupape d'étranglement requis et le degré d'ouverture de soupape d'étranglement commandé qui a été soumis au traitement de filtre et avec le degré d'ouverture de soupape d'étranglement requis, et
la section de traitement de filtre (5) engendre un retard dans une variation du degré d'ouverture de soupape d'étranglement commandé qui suit le degré d'ouverture de soupape d'étranglement requis selon la constante de temps comme le filtre extrait.

3. Dispositif de commande pour le moteur à combustion interne (11) selon la revendication 1 ou 2, dans lequel la section de traitement de filtre (5) maintient la variation du degré d'ouverture de soupape d'étranglement commandé qui suit le degré d'ouverture de soupape d'étranglement requis dans une région de degré d'ouverture comme une zone morte du degré d'ouverture de soupape d'étranglement requis par rapport à la pression de suralimentation.

4. Dispositif de commande pour le moteur à combustion interne (11) selon l'une quelconque des revendications 1 à 3, dans lequel dans le cas où le degré d'ouverture de soupape d'étranglement requis est changé dans un sens d'ouverture par rapport au degré d'ouverture de soupape d'étranglement commandé qui a été soumis au traitement de filtre, la section de traitement de filtre (5) maintient la variation du degré d'ouverture de soupape d'étranglement commandé qui suit le degré d'ouverture de soupape d'étranglement requis.

5. Dispositif de commande pour le moteur à combustion interne (11) selon l'une quelconque des revendications 1 à 4, comprenant en outre une section d'instruction d'entraînement (6) qui exécute une commande d'entraînement de la soupape de réglage de débit d'échappement de manière à assurer que la soupape de réglage de débit d'échappement suive le degré d'ouverture de soupape de réglage de débit d'échappement requis et qui exécute une commande d'entraînement de la soupape d'étranglement (214) de manière à assurer que la soupape d'étranglement (214) suive le degré d'ouverture de soupape d'étranglement commandé qui a été soumis au traitement de filtre par la section de traitement de filtre (5).

6. Procédé de commande pour un moteur à combustion interne (11) qui commande: une soupape d'étranglement (214) qui règle une quantité d'air d'admission de l'air qui est aspiré dans le moteur à combustion interne (11); et un turbocompresseur (12) qui entraîne une turbine (221) en utilisant le gaz d'échappement qui s'écoule à travers une route d'échappement du moteur à combustion interne (11) de manière à suralimenter l'air qui s'écoule à travers une route d'admission dans le moteur à combustion interne (11) par un compresseur (212) couplé à la turbine (221), le procédé de commande pour le moteur à combustion interne (11) comprenant:
un procédé de réglage de valeur cible qui établit une quantité d'air d'admission cible de l'air qui est aspiré dans le moteur à combustion interne (11) et une pression de suralimentation cible de l'air qui est suralimenté dans le moteur à combustion interne (11) sur la base d'un état de fonctionnement du moteur à combustion interne (11);
un procédé de calcul du degré d'ouverture de soupape d'étranglement requis qui calcule un degré d'ouverture de soupape d'étranglement requis qui est requis pour la soupape d'étranglement (214) selon la quantité d'air d'admission cible établie;
un procédé de calcul du degré d'ouverture de soupape de réglage de débit d'échappement requis qui calcule un degré d'ouverture de soupape de réglage de débit d'échappement requis qui est requis pour une soupape de réglage de débit d'échappement qui règle un débit du gaz d'échappement qui s'écoule à travers la route d'échappement selon la pression de suralimentation cible calculée; et
un procédé de traitement de filtre qui exécute un traitement de filtre dans lequel un filtre est appliqué à une variation d'un degré d'ouverture de soupape d'étranglement commandé qui est commandé pour la soupape d'étranglement (214) de manière à assurer que la soupape d'étranglement (214) suive le degré d'ouverture de soupape d'étranglement requis,
**caractérisé en ce que** le filtre est un filtre passe-bas qui présente une caractéristique de passe variable basée sur des constantes de temps, et la caractéristique de passe basée sur des constantes de temps est établie selon la déviation du degré d'ouverture de soupape d'étranglement et le degré d'ouverture de soupape d'étranglement requis, dans lequel la déviation du degré d'ouverture de soupape d'étranglement est égale à une différence entre le degré d'ouverture de soupape d'étranglement requis et le dernier degré d'ouverture de soupape d'étranglement commandé qui a été soumis au traitement de filtre, et
lors du procédé de traitement de filtre, un filtre qui présente une caractéristique de passe qui correspond à la déviation du degré d'ouverture de soupape d'étranglement et au au degré d'ouverture de soupape d'étranglement requis est extrait, et le filtre extrait avec la caractéristique de passe est appliqué, de manière à maintenir ou à corriger la variation du degré d'ouverture de soupape d'étranglement commandé qui suit le degré d'ouverture de soupape d'étranglement requis.
